# EUROPEAN PATENT APPLICATION

(11) **EP 4 625 172 A1**
(43) Date of publication of application: **01.10.2025**
(21) Application number: 24275033.9
(22) Date of filing: 25.03.2024
(51) Int. Cl.: G06F 9/54, H04L 67/562

(54) **DATA TRANSFER**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A system and computer-implemented method of data transfer. Embodiments comprise configuring a containerised application (210) to request data from an ambassador sidecar (208) in communication with a message broker (206), and receiving, at the ambassador sidecar, a data request from the containerised application. Embodiments further request, by the ambassador sidecar, the requested data from the message broker, and transmit, from the message broker, the requested data to the ambassador sidecar. Embodiments further transmit, from the ambassador sidecar, the requested data to the containerised application.

## Description

### FIELD OF THE INVENTION

The present invention relates to data transfer.

### BACKGROUND

It is desirable in some computer systems that transfer sensitive data to allow additional capability to be rapidly inserted. The additional capability can be implemented by an application, which may be coded by a third party other than the party that produced and/or operates the computer system.

However, in some cases, e.g. due to commercial or other sensitivity, it is not desirable to disclose some details of the computer system and/or other applications that operate on it to the third party. This can limit innovation and collaboration, which can be problematic because it can increase the period of time required to implement an external capability.

Further, such computer systems usually must follow strict data security rules and processes. This can make it difficult for data to be transmitted to and/or received from external applications.

### SUMMARY

Embodiments of the present invention can address one or more of the above technical problems.

Embodiments can utilise ambassador sidecars within a containerised data transfer system where there is currently no exploitation of ambassador sidecars. Using an ambassador sidecar can allow third parties to develop applications and services for use in connection with embodiments of the secure data transfer system without the need to disclose sensitive information to them. Embodiments can offer security via abstraction by utilising a sidecar proxy to both abstract network locations within a secure system and to inject "secrets" into containerised applications. Embodiments can operate on a containerised platform rather than virtualisation technology.

According to an aspect of the present invention there is provided a computer-implemented method of data transfer comprising:
configuring a containerised application to request data from an ambassador sidecar in communication with a message broker;
receiving, at the ambassador sidecar, a data request from the containerised application;
requesting, by the ambassador sidecar, the requested data from the message broker;
transmitting (e.g. streaming as a data stream), from the message broker, the requested data to the ambassador sidecar, and
transmitting, from the ambassador sidecar, the requested data to the containerised application.

The configuring the containerised application may comprise deploying the containerised application in a production environment using a configuration file that specifies that the containerised application will transfer data via the ambassador sidecar rather than (directly) via the message broker. Thus, when the ambassador sidecar is deployed, the message broker is specified (e.g. using its address) so that when the containerised application is deployed, the containerised application uses the ambassador sidecar for data transfer, and the ambassador sidecar uses the message broker for data transfer.

The configuring the containerised application may comprise coding the containerised application using code configured to connect to, send data to and/or receive data from the ambassador sidecar rather than the message broker. The code may specify at least one data stream provided by the message broker. The at least one data stream may be based on data provided to the message broker by another application, e.g. a data source application. The code may be provided in (and/or may operate in combination with) a software development kit, SDK, or a library. The SDK may be designed to allow applications to data transfer over a secure data transfer system comprising the message broker. The SDK may comprise information regarding at least one data stream available from the message broker but no information regarding a source of the at least one data stream, e.g. a data source application. The configuration file (and information regarding the configuration file} may not be included in the SDK.

The method may further comprise:
processing, at the containerised application, the requested data to produce output data;
transmitting, from the containerised application, the output data to the ambassador sidecar, and
transmitting, from the ambassador sidecar, the output data to the message broker (so that the output data may be available for transmission on request by another application).

The sidecar can be implemented with a Vault application to provide extra security. For example, the Vault application can be configured to store secret data relating to deployment of a trusted application. The secret data stored by the vault application can then be checked and authenticated when the sidecar tries to communicate with the message broker.

The method may comprise applying rate limiting to the transmission of, for example, the requested data from the ambassador sidecar to the containerised application. The rate limiting can be user-defined, e.g. to prohibit transmission if the requested data exceeds a user-defined number of streams.

The method may further comprise configuring a data source application, which may be a containerised application, to provide (e.g. streaming as a data stream) data to the message broker. The configuring the data source application may comprise configuring the data source containerised application to transfer data to/from the message broker via a further sidecar, e.g. an ambassador sidecar. The data source application may extract data from a data source, e.g. another application, such as a navigation/command application being executed on an aquatic vessel such as a submarine.

According to another aspect of the present invention there is provided a system comprising at least one computing device configured to operate any method substantially as described herein. The at least one computing device may be configured to:
configure a containerised application to request data from an ambassador sidecar in communication with a message broker;
receive, at the ambassador sidecar, a data request from the containerised application;
request, by the ambassador sidecar, the requested data from the message broker;
transmit, from the message broker, the requested data to the ambassador sidecar, and
transmit, from the ambassador sidecar, the requested data to the containerised application.

According to another aspect of the present invention there is provided a computer-implemented method of data transfer using a containerised application, the method comprising:
configuring the containerised application to request data from an ambassador sidecar in communication with a message broker;
providing a request for data to the ambassador sidecar;
receiving the requested data from the ambassador sidecar, and
processing the received data.

According to another aspect of the present invention there is provided a method of operating a containerised application substantially as described herein. According to another aspect of the present invention there is provided a method of operating a data source application substantially as described herein.

According to yet another aspect of the present invention there is provided a message broker configured substantially as described herein. According to yet another aspect of the present invention there is provided an ambassador sidecar configured substantially as described herein.

According to a further aspect of the present invention there is provided a computer readable medium, or circuit, storing a computer program to operate any method substantially as described herein.

It will be appreciated that features described in relation to one aspect of the present invention can be incorporated into other aspects of the present invention. For example, an apparatus of the invention can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

### BRIEF DESCRIPTION OF THE DRAWINGS

Embodiments of the invention will now be described by way of example only and with reference to the accompanying drawings:
Figure 1 is a block diagram of a computing system configurable to execute embodiments;
Figure 2 illustrates software components used by an embodiment, and
Figure 3 illustrates a more detailed example of the software components.

### DETAILED DESCRIPTION

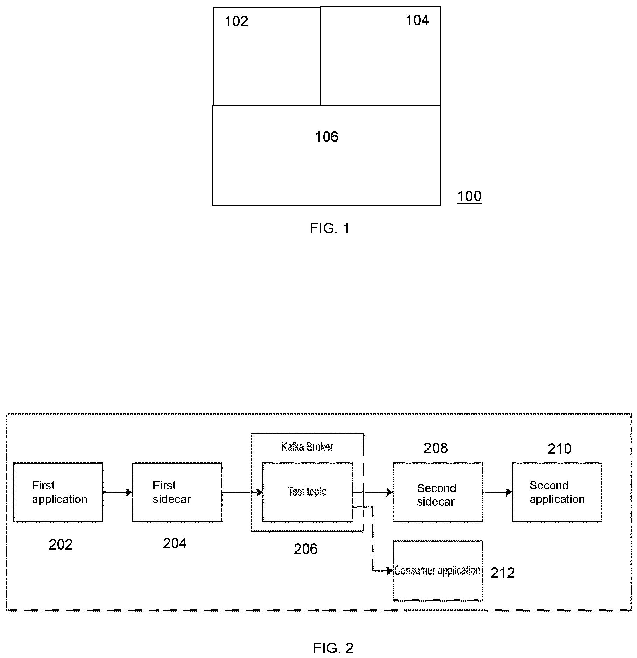

Figure 1 is a simplified block diagram of an example computing device 100 configurable to execute embodiments of the invention. The device will normally comprise, or be associated with, at least one processor 102, memory 104 and a communications interface 106. The at least one processor 102 may comprise one or more of: a microprocessor, a microcontroller and an integrated circuit. The memory 104 may comprise volatile memory, such as random access memory (RAM), for use as temporary memory, and/or non-volatile memory, such as Flash, read only memory (ROM), or electrically erasable programmable ROM (EEPROM), for storing data, programs, or instructions, for example. The communications interface 106 can provide data communication between the device and other devices/components, e.g. via a wireless or wired internet connection, a cellular network connection, or the like. Examples of suitable computer hardware include servers, desktop computers or any device that can run a Kubernetes^{™} or other containerised environment, and a full environment will typically comprise a server connected to a client device via a switch. Embodiments may therefore comprise a data transfer system comprising a plurality of computing devices in communication with each other, with each computing device being configured to execute at least one specific software component as described herein. Other components and features of the device, such as a housing, power source/supply, display, audio output, user interface, etc, will be well-known to the skilled person and need not be described herein in detail. More than one computing device in communication with each other may be used in some embodiments.

Figure 2 schematically illustrates software components that may be executed by the computing device 100 to provide a secure data transfer system according to embodiments. The system can allow data to be transferred securely to/from at least one application and at least one other component, e.g. another application, of the system. The example software components comprise a first application 202. In specific embodiments the applications involved may comprise containerised applications executable by a containerised platform. Containers are similar to virtual machines but have relaxed isolation properties to share the Operating System among applications and so are considered lightweight. A container typically has its own filesystem, CPU share, memory, process space and so on. As containers are decoupled from the underlying infrastructure, they are portable across clouds and OS distributions. Example embodiments can operate using Kubernetes^{™} (see kubernetes.io), but it will be understood that alternative containerised platforms, such as Docker^{™}, RedHat OpenShift^{™} Container Platform, Rancher^{™} or VMware Tanzu^{™}, can be used.

The software components can further comprise a message broker 206. In specific embodiments this may comprise a Kafka^{™} broker (https://kafka.apache.org/), which is sometimes also called a streaming event broker, but it will be understood that alternatives, such as RabbitMQ^{™} or Redis^{™}, can be used. In general terms, a message broker can translate a message from the formal messaging protocol of a sender to the formal messaging protocol of a receiver. More specifically, a message broker can be considered an architectural pattern for message validation, transformation and routing and can mediate communication among applications, minimizing the mutual awareness required amongst the applications to exchange messages.

The first application 202 may communicate with the message broker 206 by means of a first sidecar 204. A sidecar is typically a utility container than runs alongside a main application and can perform certain functions. In embodiments that use Kubernetes^{™}, the first application and the first sidecar may share the same Pod, which can entail sharing the same volume and network resources. Both containers may be deployed as one unit. Hence, the sidecar container can be used to modify how the application container works without having to make any changes to its code. In specific embodiments one or more of the sidecars used can comprise an ambassador sidecar. An ambassador container is typically a sidecar container that is in charge of proxying connections from the application container to other services and which can act as a client proxy. Ambassador sidecars are generally considered a design principle and several publicly-available examples are available.

The software components further comprise a second application 210. The second application communicates with the message broker 206 by means of a second sidecar 208, typically an ambassador sidecar. In some embodiments a further application 212 can directly transfer data to/from the message broker without a sidecar. It will be appreciated that in alternative embodiments different numbers of applications may be used. In an example use case, the first application 202 produces data that is be processed by the second application 210. Data output as a result of the processing performed by the second application 210 may be received by the message broker and made available to the further application 212 for processing.

The general operation of an ambassador sidecar can be explained with the following simplified example and singular data flow. For the first application 202 to communicate with the second application 210, the first application 202 has the first sidecar 204 running alongside it, and the second application 210 has the second sidecar 208. If the first application 202 wants to send a message to the second application 210 in this scenario then the first sidecar 204 acts on behalf of the first application 202 to route and send the message to the second application 210. On behalf of the second application 210 the second sidecar 208 receives the message via the message broker 206. The second sidecar 208 can then route the message onwards to the second application 210.

The use of the second sidecar 208 means that the second application 210 can be coded by a third party without them needing to know certain information that an operator of the secure data transfer system wishes to keep confidential, such as information regarding the first application 202, e.g. at least some of its code and/or operations. The second sidecar 208 passes on information to the second application on behalf of the broker 206. This means that the second application will receive data from the second sidecar rather than from the broker directly. Thus, the second application can access this data by proxy and so does not interact directly with the data transfer system/first application. Therefore, a third party can code the second application without needing to know certain details regarding the first application, for example.

In some embodiments one or more of the steps described herein may be performed by a remote computing device, such as a server or a cloud service, that is in communication with the device 100. It will also be appreciated that at least one of the steps described herein may be re-ordered or omitted. One or more additional steps may be performed in some cases. In alternative embodiments some of the steps may be performed concurrently, possibly on different processors or cores. It will also be understood that embodiments can be implemented using any suitable software, programming language, data editors, etc, and may be represented/stored/processed using any suitable data structures and formats. The method can be initiated in any suitable manner, such as an application being opened by a user or called by another process. The steps may be executed by a stand-alone application or may be provided as part of a multifunction application.

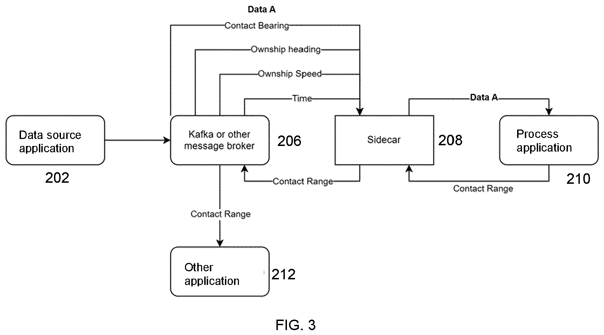

Figure 3 shows a more specific example of an embodiment of the secure data transfer system. Here, the first application 202 is configured to provide data that is to be processed by the second application 210, which then produces output data. In the example, the first application is configured to provide data relating to an aquatic vessel that comprises, for example, contact bearing, ownship heading, ownship speed and time. The second application obtains this data via the sidecar 208 to which it is connected, rather than from the broker 206 directly. This means that the second application is accessing the data by proxy and so has no direct interaction with the first application/related software components. Therefore, a third party can code the second application without needing to know full details of the first application, for example. In some embodiments the second application may be configured to calculate an Ekelund Range value based on the received data.

Embodiments can therefore offer data transfer security as the first application 202 can process sensitive data, such as real-time data regarding activities of a military aquatic vessel, that should not be generally shared/accessed, e.g. with/by the third party developer. In some embodiments the first application may extract data from another data source or application, such as a navigation/command application being executed on a vessel. It will be understood that this is merely one example of the type of sensitive data that can be transferred by embodiments and that alternative embodiments may transfer sensitive data provided by any kind of sensor, personal data from a confidential database, etc.

There are two main elements that can allow the second application 210 to operate in the secure data transfer system. First, the second application is coded using specific code that allows it to interact with the secure system and transfer data from/to it, e.g. using a specific Software Development Kit (SDK). Second, after the second application has been coded it needs to be securely deployed in a container of the secure system.

In embodiments the broker 206 can offer certain data feeds to which a third party application, such as the second application 210, can subscribe. The available data feeds can be made known to a developer of the second application 210 by means of an SDK that is provided by a party who is typically a system integrator responsible for operating/controlling the secure data transfer system. Distribution of the SDK can be controlled by the system integrator, e.g. only to parties who have agreed to treat it confidentially. The relevant parts that the SDK defines in this context can include: what is the system into with which the secure data transfer is being used; technologies used (e.g. programming languages (such as Python^{™} or any other language that provides sidecar functionality); message format (e.g. protobuf (see below example code implementation)); syntax; message; data elements; application testing (e.g. setting up the environment, checking the security); available databases, data and services; Secrets Management (e.g. Vault); containerisation; deployment, and/or sidecar deployment instructions (code and configuration). For ambassador sidecars to work, secure system providers can provide the SDK that can be used to write code that will send and receive data through the sidecar. The custom code allows messages to be sent and received in the format of the secure data transfer system and using the sidecar.

The system integrator may also be involved in developing or using the first application 202. In the example where the second application calculates an Ekelund Range value, the developer of the second application can, through the SDK, see that data streams including contact bearing, ownship heading, ownship speed and time are available for processing, but cannot access them directly through the broker 206. The SDK will therefore include as part of its formula some example code for the developer to use to achieve this. The SDK example code can specify which variables are available (although no further details regarding the source of the data, such as the first application 202, will be given). The SDK can be based on any suitable code, e.g. Python. From this code, the developer of the second application can specify that they want it to access one or more specific data stream, but they will never know what the system makeup is, as the sidecar 208 will be providing access to the data automatically. An example code snippet is given below:

```
       from cloudevents.sdk.event import v1
       from ext.grpc import App
       import json
       import logging
       app = App()
       #subscribe to a topic
       @app.subscribe(pubsub_names='kafka-sub", topic='test/')
       def mytopic(event):
              message = event.data.decode(`utf-8')
              print(f"Received message: {message}')
       logging.basicConfig(level=logging.INFO)
       if_name_ == '_main_';
              app.run(3600)
```

In embodiments the code may import a protobuf file that instructs the code when reading the 'pubsub_name' to decode it in a certain way. In this case, pubsub_name is a configuration file that defines the broker details and in conjunction with this, the topic, which could be any desired information stream(s), such as "contract bearing" from the example of Figure 3. Then, below the print function, the developer can write any code they would like to utilise this information and the process can be repeated, or enhanced for multiple topics and information streams. Below is an example of the message stream for a singular topic showcasing where it came from and the details in reference to the above example code:

```
       key: null
       partition: 0
       offset: 816570
       Headers:
       Value:
       ("data":"(\"message"\:\"Hello world\"),"datacontenttype":"text/plain")
```

Corresponding code can be written for sending a message, e.g. by modifying the above message for any type of data to be sent, and to any topic that has been defined.

For an application such as the second application 210 to be successfully deployed in the secure data transfer system, the system integrator has one or more non-standard/additional configuration file that must be used for the deployment. These effectively modify the application to work with one or more sidecar. Without use of the configuration file(s) an application will not work in the secure system. Instead of the application specifying a Kafka^{™} broker, as is usual, the configuration files causes it to specify a sidecar function for data transfer. During deployment the sidecar 208 connects to the broker 206 using the configuration file provided. When deploying the sidecar, the Kafka^{™} broker is specified (e.g. using the address or where it is located) so that when the second application 210 is deployed, it looks for the sidecar 208 and the sidecar looks for the broker 206.

The commented code below is an example of a software component specification that can be used by embodiments. As part of the deployment process and to ensure that the system is cyber secure, the system integrator will deploy the application in the secure system; the developer of the second application codes it to the system integrator's specification and provides it to the system integrator for deployment. Therefore, the configuration file is not intended be seen/accessed by the third party developer.

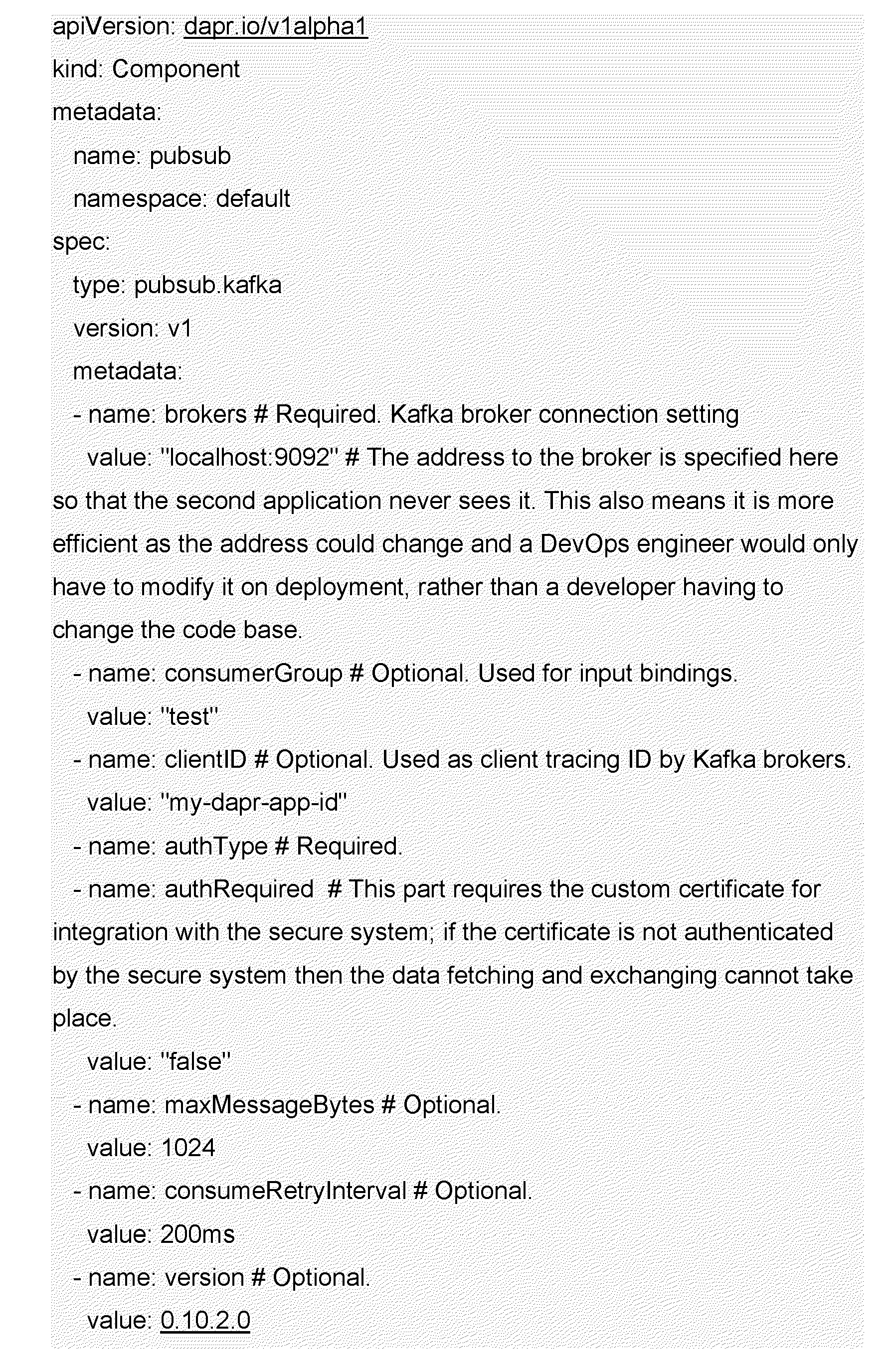

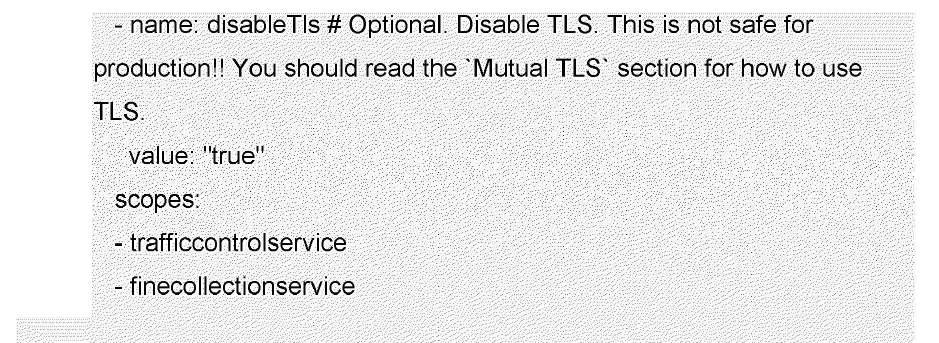

The scope is the name of the data that the application is to fetch; for example, ownship, heading and time.

In use, the first application 202 sends its data ("Data A") to the broker 206 so that the data is available to be requested as the broker has been setup to receive any such requests. In the illustrated example, the first application communicates with the broker 206 directly without a sidecar (although it will be appreciated that a first side car 204 may be used in alternative embodiments). A developer of the second application 210 can use the custom code (that they will typically have created in combination with the SDK) to connect, send and/or receive data via the second sidecar 208, e.g. by specifying to which data streams to subscribe. The system integrator can configure the necessary files to deploy the second application through a systems integration process as required. After deployment the completed application can transfer data by performing the steps described herein.

The second application 210 can then request data from the sidecar 208 using the custom code. On behalf of the second application, the sidecar requests the specified data (e.g. contact bearing, ownship heading, ownship speed and time) and the broker 206 receives this request and provides the sidecar with the relevant data streams. The sidecar provides the datastreams to the second application 210. In some cases this can include rate limiting etc. ensuring that the application is not requesting too frequently (i.e. a DoS attack). Rate limiting can be defined within the configuration. For example, based on the expected data rate of the code (e.g. x information streams are going to be consumed and then y streams will be sent at an expected amount) a developer can define and assume that requests that exceed this will be unauthorised as configured. The rate limiting function can be configured to be turned on or off. The second application processes the received data and produces the desired output, e.g. a contact range value. The second application (using the SDK for sending data using the sidecar) sends the produced contact range to the sidecar. Thus, the sidecar receives the contact range data and forwards it to the broker. The data contact range is then available to be requested/streamed by another application 212 from the broker.

When deploying applications to Kubernetes^{™} (or any other production environment), it is desirable to have an automated way of authenticating so that human intervention is not required every time a deployment is made or a replica of a pod is spun up. Therefore, in order for an application to be authenticated, it needs to obtain a password or token from a trusted source. Embodiments can use a vault sidecar to solve this problem, allowing applications to be authenticated automatically by injecting secrets into Kubernetes^{™} pods, for example. Some embodiments can use Vault^{™}, which is a COTS secrets management solution that can be configured to work with the sidecars and manage custom certificates. Vault can be checked and authenticated when the sidecars are used and try and communicate with the Kafka^{™} messaging broker. Vault^{™} works by using the Vault Agent Injector service which can be summarised as follows:
Deployments which need secrets to be injected are deployed with specific Vault^{™} annotations detailing where the secrets will be available to them, and with a Kubernetes^{™} service account attached, which has access to the required secrets via a Vault^{™} policy linked to the Service account.

The Vault^{™} Agent is a service that monitors Kubernetes^{™} 'create' and 'update' events, and once it detects these, checks for the specific annotation that marks the pod as one into which the secrets are to be injected.

Upon the target application starting, the Vault^{™} Agent can start an init and sidecar container in the pod, which will inject secrets from Vault to the desired filepath in the pod. It does this using an init container, which populates secrets before the application container starts and then quits, and a sidecar container which runs alongside the applications container and keeps itself authenticated, and populates new secrets as required.

The application then can read the secrets in the shared volume that have been injected by the Agent.

Within the configuration of the sidecar, additional annotations can be used as part of the metadata to provide context for the agent-inject, agent-configmap, and TLS-secret requirements of the Vault^{™} authentication service. An example is given below:

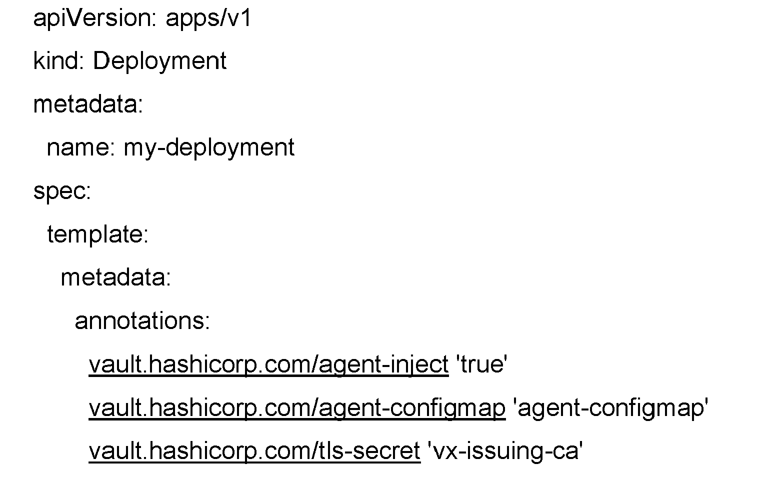

Additionally, alongside the deployment, a ConfigMap will also be required. An example is given below:

```
       ---
       apiVersion: v1
       kind: ConfigMap
       metadata:
        name: agent-configmap
       data:
        config.hcl: | <Sidecar container configuration in literal HCL>
        config-init.hcl: | <Init container configuration in literal HCL>
```

The benefits of implementing the ambassador sidecar pattern in embodiments of the data transfer system can include:
Handling external communication - applications will communicate via proxy which delivers many benefits.
Routing - the sidecar means that streaming services can be interchangeable without modifying the codebase, e.g. the sidecar will be responsible for changing a data streaming service from Kafka^{™} to rabbitmq.
Authentication - the sidecar can be implemented with applications such as Vault, or logins to streaming services, providing an extra layer of security.
Rate-limiting - as the sidecar is acting on behalf of the application, it can limit the data rate, presenting an additional layer of control over data ingress or egress.
Simplifying an application, making it easier to manage and maintain - away from the codebase, sidecars are instructed through infrastructure as code, meaning a developer can write their code without worrying about specifics such as IP addresses, and an infrastructure engineer can specify exactly how they want the application to interface.

Terms such as 'component', 'module', 'processor' or 'unit' used herein may include, but are not limited to, a hardware device, such as circuitry in the form of discrete or integrated components, general processing units (GPUs), a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

## Claims

1. A computer-implemented method of data transfer comprising:
configuring a containerised application (210) to request data from an ambassador sidecar (208) in communication with a message broker (206);
receiving, at the ambassador sidecar, a data request from the containerised application;
requesting, by the ambassador sidecar, the requested data from the message broker;
transmitting, from the message broker, the requested data to the ambassador sidecar, and
transmitting, from the ambassador sidecar, the requested data to the containerised application.

2. A method according to claim 1, wherein the configuring the containerised application (210) comprises deploying the containerised application in a production environment using a configuration file that specifies that the containerised application will transfer data via the ambassador sidecar (208) rather than via the message broker (206).

3. A method according to claim 2, wherein the configuring the containerised application (210) comprises coding the containerised application using code configured to connect to, send data to and/or receive data from the ambassador sidecar (208) rather than the message broker (206).

4. A method according to claim 3, wherein the code specifies at least one data stream provided by the message broker (206).

5. A method according to claim 3 or 4, wherein the code is provided in, and/or operates in combination with, a software development kit, SDK, wherein the SDK is designed to allow applications to data transfer over a secure data transfer system comprising the message broker (206).

6. A method according to claim 5, wherein the SDK comprises information regarding at least one data stream available from the message broker (206) but no information regarding a source of the at least one data stream.

7. A method according to claim 5 or 6, wherein the configuration file is not included in the SDK.

8. A method according to any preceding claim, further comprising:
processing, at the containerised application (210), the requested data to produce output data;
transmitting, from the containerised application, the output data to the ambassador sidecar (208), and
transmitting, from the ambassador sidecar, the output data to the message broker (206).

9. A method according to any preceding claim, wherein the ambassador sidecar (208) is implemented using a vault application configured to store secret data that is checked and authenticated when the ambassador sidecar attempts to communicate with the message broker (206).

10. A method according to any preceding claim, further comprising applying rate limiting to the transmission of the requested data from the ambassador sidecar (208) to the containerised application (210).

11. A method according to claim 10, wherein the rate limiting is user-defined to prohibit transmission if the requested data exceeds a user-defined number of streams.

12. A method according to any preceding claim, further comprising configuring a further containerised application (202) to provide the requested data to the message broker (206).

13. A method according to claim 12, wherein the configuring the further containerised application (202) comprises configuring the further containerised application to transfer data to/from the message broker (206) via a further ambassador sidecar (204).

14. A data transfer system comprising at least one computing device (100) configured to:
configure a containerised application to request data from an ambassador sidecar in communication with a message broker;
receive, at the ambassador sidecar, a data request from the containerised application;
request, by the ambassador sidecar, the requested data from the message broker;
transmit, from the message broker, the requested data to the ambassador sidecar, and
transmit, from the ambassador sidecar, the requested data to the containerised application.

15. A computer readable medium, or circuit, storing a computer program to operate a method according to any of claims 1 to 13.
